(19)

Europäisches Patentamt
European Patent Office
Office européen des brevets

(11) **EP 3 016 027 A2**

(12) **EUROPEAN PATENT APPLICATION**

(43) Date of publication:
04.05.2016 Bulletin 2016/18

(51) Int Cl.:
*G06K 9/00* (2006.01)

(21) Application number: **15190927.2**

(22) Date of filing: **22.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.10.2014 JP 2014221586**

(71) Applicant: **Panasonic Intellectual Property Management Co., Ltd.**
**Osaka-shi, Osaka 540-6207 (JP)**

(72) Inventors:
- ARATA, Koji
  Osaka-shi, Osaka 540-6207 (JP)
- LASANG, Pongsak
  469332 Singapore (SG)
- SHEN, ShengMei
  469332 Singapore (SG)

(74) Representative: **Grünecker Patent- und Rechtsanwälte**
**PartG mbB**
**Leopoldstraße 4**
**80802 München (DE)**

(54) **HUMAN BODY PART DETECTION SYSTEM AND HUMAN BODY PART DETECTION METHOD**

(57)    A human body part detection system includes: a learning mode storing unit storing a learning model; a depth image acquisition unit acquiring a depth image; a foreground human extraction unit extracting a human area; and a human body part detection unit detecting the human body part based on the human area and the learning model. The detection unit calculates a direction of a geodesic path at a first point based on a shortest geodesic path from a base point to a first point, selects a pixel pair at positions obtained after rotating positions of a pixel pair for calculation of the feature in the learning model in accordance with the direction, calculates a feature at the first point based on depth of the selected pair, and determines a label corresponding to the human body part based on the feature at the first point and learning model.

FIG. 1

**EP 3 016 027 A2**

**Description**

BACKGROUND

1. Technical Field

The present disclosure relates to a human body part detection system and a human body part detection method.

2. Description of the Related Art

Conventionally, a technique for detecting a human body part by using a depth image including information on depth from a predetermined point is known. Such a technique is applicable to fields such as video games, interaction between a human and a computer, monitoring systems, video-conference systems, healthcare, robots, and automobiles.
For example, in a case where such a technique is applied to the video game field, a user can enjoy video games by operating a gaming machine by a change of a posture and gesture without using a keyboard or a mouse.
For example, U.S. Patent Application Publication No. 2013/0266182 discloses a method for detecting a posture of a person on the basis of a depth image including, as a pixel value, information on depth which is a three-dimensional measurement value. In this method, one or more adjacent offset pixels are selected for each pixel of the depth image which is a target of learning, and association between the pixel and a human body part is stored as learning data on the basis of pixel values of these pixels. Then, to detect a human body part, the degree of association between a target pixel in the depth image and the human body part is calculated on the basis of the target pixel, pixel values of offset pixels, and the learning data.
In the technique of U.S. Patent Application Publication No. 2013/0266182, a positional relationship between a target pixel and offset pixels are fixed for each target pixel. Therefore, in a case where an angle of a body part in a depth image is largely different (for example, in a case where an arm is rotated around a shoulder) from that in a posture of a person in the depth image used for generation of learning data, features of pixel values of the target pixel and the offset pixels do not match features in the learning data. This makes it difficult to detect a human body part.
Therefore, in this method, there is a possibility that the accuracy of detection of a human body part decreases. Furthermore, in order to achieve accurate detection of a body part, an extremely large number of learning data that correspond to various postures of the human body are needed.

SUMMARY

One non-limiting and exemplary embodiment provides a human body part detection system and a human body part detection method that make it possible to accurately and effectively detect a body part in various postures.
In one general aspect, the techniques disclosed here feature a human body part detection system including: a storage in which a learning model which is a result of learning of a feature of a human body part is stored; an acquirer that acquires a depth image; an extractor that extracts a human area from the depth image; and a human body part detector that detects the human body part on the basis of the human area and the learning model, the human body part detection unit including: a base point detector that detects a base point in the human area; a calculator that calculates a direction of a geodesic path at a first point on the basis of a shortest geodesic path from the base point to a first point in the human area; a selector that selects a pair of pixels on the depth image that are located at positions obtained after rotating, around the first point, positions of a pair of pixel used for calculation of the feature in the learning model in accordance with the direction; a feature calculator that calculates a feature at the first point on the basis of information on depth of the selected pair of pixels; and a label determiner that determines a label corresponding to the human body part on the basis of the feature at the first point and the learning model.
According to the present disclosure, it is possible to accurately and effectively detect a body part in various postures.
It should be noted that general or specific embodiments may be implemented as a system, a method, an integrated circuit, a computer program, a storage medium, or any selective combination thereof.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

2

Fig. 1 is a block diagram illustrating an example of a configuration of a human body part detection system according to Embodiment 1 of the present disclosure;

Fig. 2 is a block diagram illustrating an example of a configuration of a human body part detection unit according to Embodiment 1 of the present disclosure;

Figs. 3A through 3D are diagrams illustrating a specific example of processing for calculating a feature according to Embodiment 1 of the present disclosure;

Figs. 4A through 4D are diagrams for explaining immutability of feature description in different postures according to Embodiment 1 of the present disclosure;

Figs. 5A and 5B are diagrams illustrating a method for selecting a pair of pixels in a case where no rotation correction is performed;

Figs. 6A through 6C are diagrams illustrating a method for selecting a pair of pixels in a case where rotation correction is performed;

Fig. 7 is a flow chart illustrating an example of a procedure of human body part detection processing according to Embodiment 1 of the present disclosure;

Fig. 8 is a block diagram illustrating an example of a configuration of a human body part detection system according to Embodiment 2 of the present disclosure;

Figs. 9A and 9B are diagrams for explaining superpixel clustering according to Embodiment 2 of the present disclosure;

Fig. 10 is a diagram for explaining superpixel-basis feature calculation according to Embodiment 2 of the present disclosure;

Fig. 11 is a diagram for explaining a deep artificial neutral network according to Embodiments 1 and 2 of the present disclosure; and

Fig. 12 is a diagram for explaining skeletal joints of a human body according to Embodiments 1 and 2 of the present disclosure.

DETAILED DESCRIPTION

Embodiments of the present disclosure are described below with reference to the drawings.

Embodiment 1

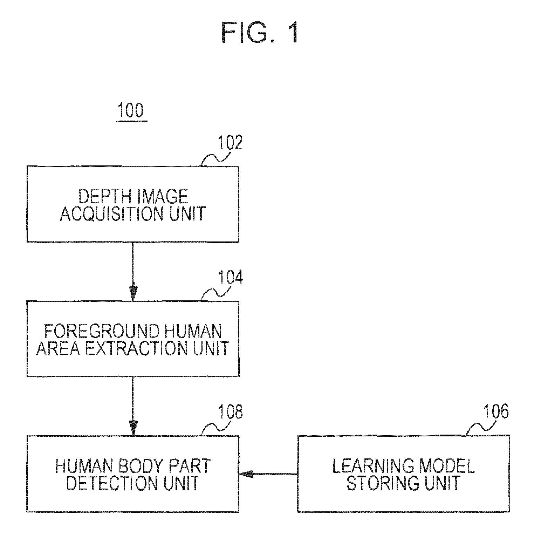

First, an example of a configuration of a human body part detection system 100 according to the present embodiment is described below with reference to Fig. 1. Fig. 1 is a block diagram illustrating an example of a configuration of the human body part detection system 100 according to the present embodiment.

As illustrated in Fig. 1, the human body part detection system 100 includes a depth image acquisition unit 102, a foreground human area extraction unit 104, a learning model storing unit 106, and a human body part detection unit 108.

The depth image acquisition unit 102 acquires a depth image from a depth camera or a recording device.

The foreground human area extraction unit 104 extracts an area of a human that exists before the background (hereinafter referred to as a foreground human area) by using information on depth in the depth image. Note that the foreground human area extraction unit 104 may extract a foreground human area on the basis of three-dimensional connected component analysis.

The learning model storing unit 106 stores therein data of a learning model and the like obtained as a result of learning of a feature of a human body part. The data of the learning model includes information such as information on the position of a pixel selected for calculation of the feature and information on a pair of pixels that will be described later.

The human body part detection unit 108 detects the human body part included in the foreground human area extracted by the foreground human area extraction unit 104 on the basis of the learning model stored in the learning model storing unit 106 and then assigns the detected part a label indicative of the part.

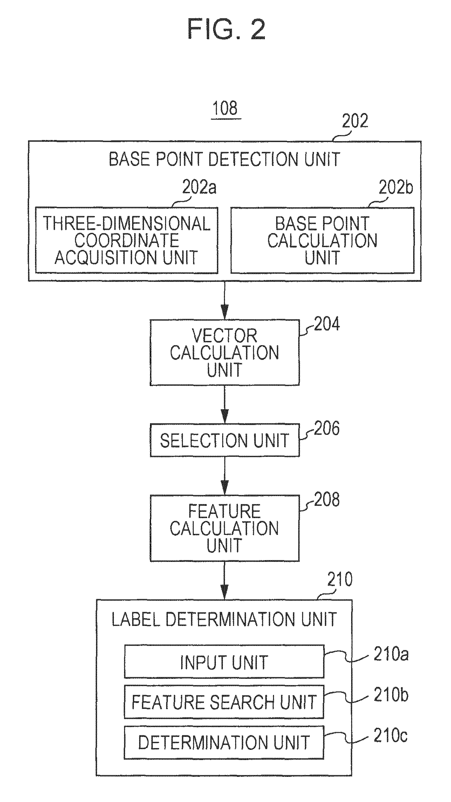

Next, an example of a configuration of the human body part detection unit 108 is described below with reference to Fig. 2. Fig. 2 is a block diagram illustrating an example of a configuration of the human body part detection unit 108 according to the present embodiment.

As illustrated in Fig. 2, the human body part detection unit 108 includes a base point detection unit 202, a vector calculation unit 204, a selection unit 206, a feature calculation unit 208, and a label determination unit 210.

The base point detection unit 202 detects a base point in the foreground human area extracted by the foreground human area extraction unit 104. The base point is, for example, a point at a position corresponding to the center of gravity, the average, or the median of three-dimensional coordinates of pixels included in the foreground human area in a real-world coordinate system.

As illustrated in Fig. 2, the base point detection unit 202 includes a three-dimensional coordinate acquisition unit 202a that acquires three-dimensional coordinates in the real-world coordinate system from the depth image and a base point calculation unit 202b that calculates a base point in the foreground human area by using the acquired three-dimensional coordinates.

The vector calculation unit 204 calculates a reference vector directed in a geodesic direction at a first point by calculating the shortest geodesic path connecting the base point and the first point. For example, the reference vector is calculated on the basis of geodesic gradient of the foreground human area. The first point is a predetermined point in the foreground human area and is different from the base point.

The selection unit 206 calculates positions obtained after rotating the positions of a pair of pixels used for calculation of the feature in the learning model in accordance with the direction of the reference vector and then selects pixels at the calculated positions on the depth image as pixels used for calculation of feature. The pair of pixels is two different pixels that are spaced by a predetermined distance from the first point in a predetermined direction.

The feature calculation unit 208 calculates a feature of the human body part at the first point on the basis of depth information of the pair of pixels. This calculation method will be described later in detail.

The label determination unit 210 determines a label corresponding to the human body part on the basis of the feature of the human body part at the first point and the learning model.

As illustrated in Fig. 2, the label determination unit 210 includes an input unit 210a that accepts input of the feature of the human body part at the first point, a feature search unit 210b that searches for the feature of the human body part at the first point in the learning model, and a determination unit 210c that determines a label corresponding to the human body part on the basis of the searched feature.

The feature search unit 210b may use a deep artificial neural network to search for the feature of the human body part at the first point. The determination unit 210c may determine the label by logistic regression analysis.

Next, an example of a method for calculating a feature by the feature calculation unit 208 is described below.

In the following description, I(p) represents depth of a pixel at a position $p = (x,y)^T$ on a depth image I.

The following is a local feature descriptor that is defined by coverage and a feature list F:

$$D_{C_{p_c,r},F}$$

The coverage is expressed as follows:

$$C_{p_c,r}$$

The coverage is a circular cover range of the local feature descriptor within the depth image I where $p_c$ is the center of the cover range and r is the radius of the cover range.

The feature list F is a list of pairs of pixels {$P_1$, ..., $P_n$}. Note that $P_i$ ($1 \leq i \leq n$ (n is any integer)) is an i-th pair of pixels which is expressed as follows:

$$P_i = \left( p_u^i, p_v^i \right)$$

where $p_u$ and $p_v$ are positions of two pixels included in the pair of pixels.

A comparison function is expressed by the following expression (1):

$$\tau\left(p_u, p_v\right) = \begin{cases} 1, & \text{if } |I(p_u) - I(p_v)| > t \\ 0, & \text{otherwise} \end{cases} \quad \text{... expression (1)}$$

In the above expression, ($p_u$,$p_v$) is a pair of pixels in the feature list F, and t is a threshold value. For example, the threshold value t is set to a value such that the probability of occurrence of 0 and the probability of occurrence of 1 are the same in the comparison function $\tau(p_u,p_v)$.

By applying the comparison function $\tau(p_u,p_v)$ to the feature list F, a binary string, which is expressed as follows, is obtained, and a feature vector of the local feature descriptor is obtained.

$$f \in \{0,1\}^{n}$$

Note that the cover range of the local feature descriptor should be made constant with respect to a real-world space so that the local feature descriptor becomes immutable irrespective of a change of depth. Therefore, the radius r of the coverage of the depth image may be defined as follows on the basis of knowledge of projective geometry:

$$r = \frac{\alpha}{I(p_c)}$$

In the above expression, $I(p_c)$ is depth at a pixel located at the center $p_c$ of the cover range, and $\alpha$ is a constant determined on the basis of the size of the cover range in the real-world space and a focal length of the depth camera. Intuitively, the value of $\alpha$ should be made large as the subject becomes closer to the depth camera, and vice versa.

Since the local feature descriptor that is immutable irrespective of a change of a posture is obtained, positions obtained after rotating the positions of a pair of pixels used for calculation of the feature in the learning model in accordance with the direction of the reference vector are calculated, and a pair of pixels located at the calculated positions on the depth image is selected as pixels used for calculation of a feature. The reference vector is a vector indicative of a reference direction of the local descriptor.

By giving a consistent direction to each local feature descriptor on the basis of a local property, the local feature descriptor can be defined relative to the direction. As a result, consistency with respect to rotation can be achieved. Note that a cover range of a local feature descriptor as a geodesic immutable descriptor is expressed as follows:

$$C_{p_c,r,\Gamma}$$

where $\Gamma$ represents a reference direction of the local feature descriptor.

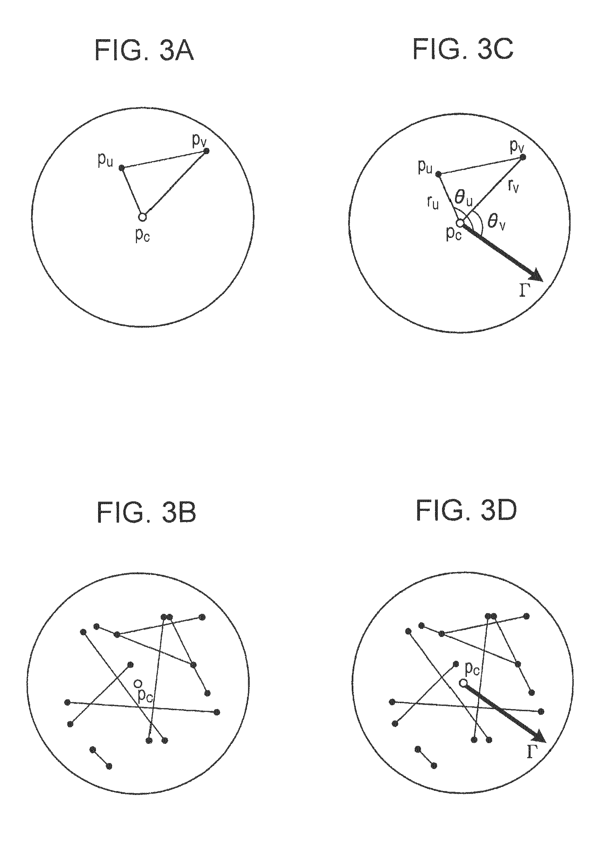

Next, a specific example of processing for calculating a feature in the present embodiment is described below with reference to Figs. 3A through 3D. Each of the circles illustrated in Figs. 3A through 3D is a circle having a radius r and having center at the first point $p_c$ and indicates a cover range of the local feature descriptor.

In Fig. 3A, for example, a 1-bit feature at the first point $p_c$ is generated by comparison between the pixel $p_u$ and the pixel $p_v$ in the pixel pair by using the comparison function expressed by the expression (1). Actually, comparison is performed in a plurality of pixel pairs as illustrated in Fig. 3B, and a binary string is constituted by features obtained by the comparison. This binary string is used as a feature at the first point $p_c$.

Note that the pair of pixels $p_u$ and $p_v$ is specified by a polar coordinate system defined by the reference vector as illustrated in Fig. 3C. In this polar coordinate system, the first point $p_c$ is regarded as a pole, and the direction $\Gamma$ of the reference vector is regarded as a direction of the polar axis.

For example, in a case where the pixel $p_u$ is selected, two parameters are determined. One of the two parameters is an angle expressed as follows:

$$\theta_u \in [0, 2\pi)$$

The other one of the two parameters is a distance expressed as follows:

$$r_u \in [0, r)$$

The same applies to the pixel $p_v$.

As illustrated in Fig. 3D, also in a case where there are a plurality of pairs of pixels, an angle and a distance are determined for pixels included in each of the pairs. Note that since the angle $\theta_u$ is a relative angle measured from the direction $\Gamma$ of the reference vector, all of the pixels pairs are in a covariant relationship with respect to the reference vector.

Note that the reference vector is calculated, for example, as follows. In the following description, $f_g$ represents a foreground human area extracted from the depth image by the foreground human area extraction unit 104, and $p_o$

represents a base point in $f_g$.

First, an undirected graph G = (V, E) is generated from the image $f_g$. A point set V is constituted by all points of $f_g$, and a branch set E is constituted by adjacency relationships in $f_g$. The weight of each branch corresponds to a Euclidean distance between adjacent points. A geodesic path length between two points is defined as a weighted total sum of shortest paths and is, for example, efficiently calculated by a Dijkstra's algorithm.

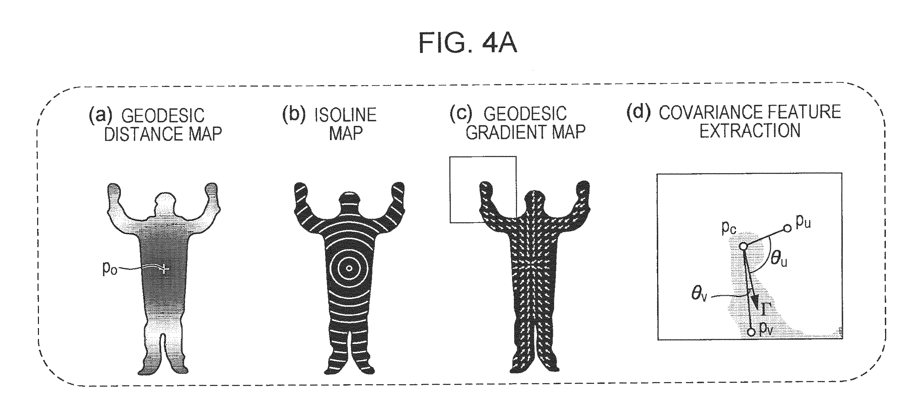

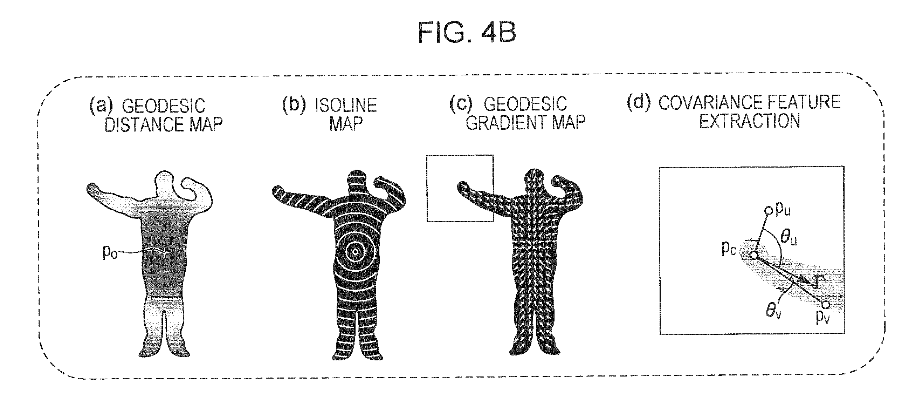

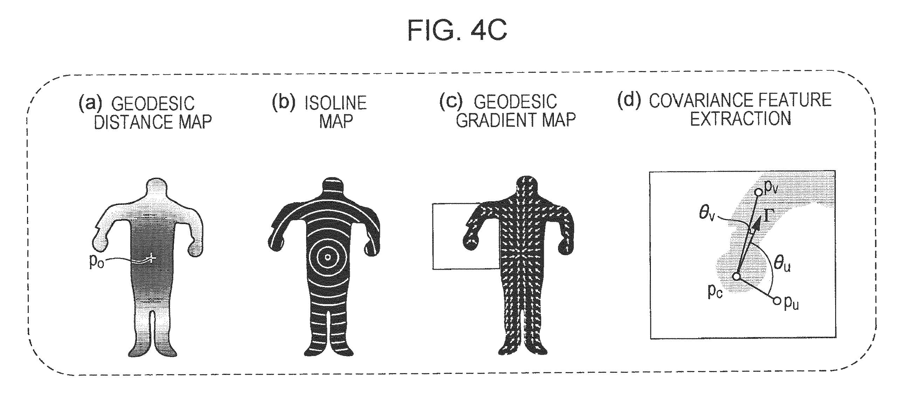

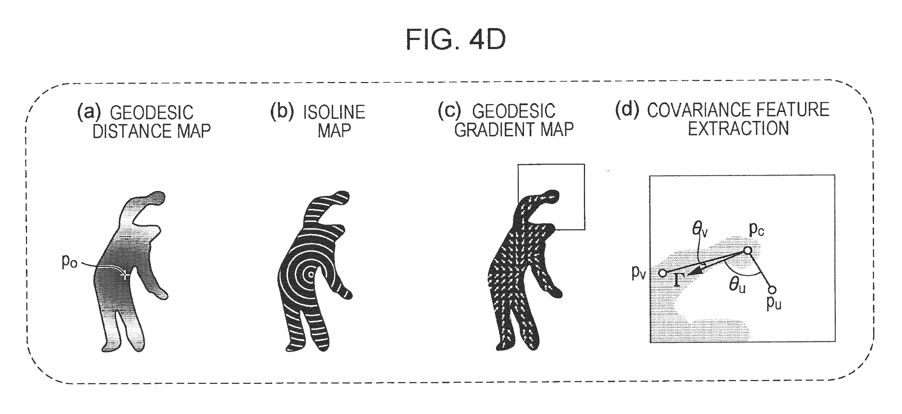

The leftmost column (a) of Figs. 4A through 4D illustrates a geodesic path length map obtained by calculating a geodesic path length from each point to the base point $p_o$ in $f_g$. The second column from the left of Figs. 4A through 4D illustrates a distance to the base point $p_o$ by an isoline map.

The direction r of the reference vector at each point in the foreground human area is calculated as follows:

$$\Gamma = \arctan\left(\frac{\partial I_d}{\partial x}, \frac{\partial I_d}{\partial y}\right)$$

where $I_d$ is a geodesic path length from each point to the base point $p_o$ in $f_g$.

The result of calculation of the direction $\Gamma$ is illustrated in the third column (c) from the left of Figs. 4A through 4D. The direction $\Gamma$ thus calculated is a direction of the geodesic path obtained by the above calculation.

Next, a property of the reference vector is described. The fourth column (d) from the left of Figs. 4A through 4D is an enlarged view of an arm part (part surrounded by a rectangle) in four different postures illustrated in the third column (c).

When calculating a feature at the first point $p_c$ to specify a human body part, positions obtained after rotating the positions of a pair of pixels used for calculation of the feature in the learning model in accordance with the direction $\Gamma$ of the reference vector are calculated. Then, a pair of pixels located at the calculated positions on the depth image is selected as pixels used for calculation of a feature.

This stabilizes the positions of the pair of pixels used for calculation of a feature with respect to the human body part even if the posture varies, thereby obtaining consistency against a change of the posture.

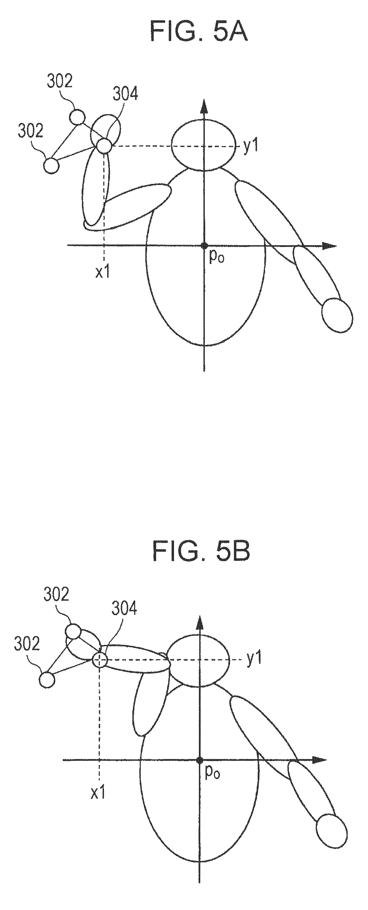

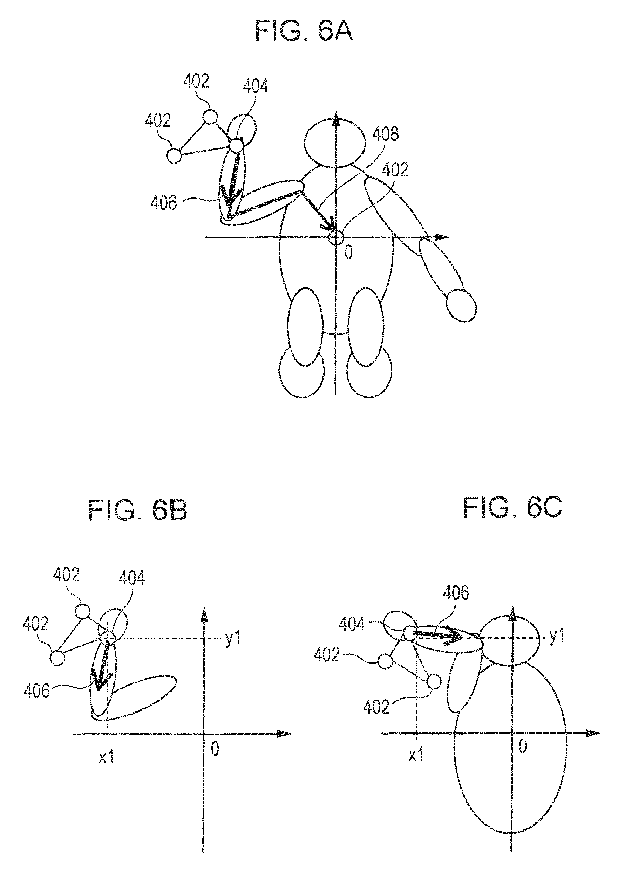

Next, a specific method for selecting a pair of pixels is described below with reference to Figs. 5A, 5B, and 6A through 6C. Figs. 5A and 5B are diagrams illustrating a method for selecting a pair of pixels in a case where no rotation correction is performed. Figs. 6A through 6C are diagrams illustrating a method for selecting a pair of pixels in a case where rotation correction is performed.

As illustrated in Figs. 5A and 5B, in a case where rotation correction of a pair of pixels 302 is not performed, the positions of the pair of pixels 302 used for calculation of a feature do not change even if the posture of a person changes, for example, by rotation of an arm. In this case, there is a large different between the case of Fig. 5A and the case of Fig. 5B in terms of the feature at the first point 304 calculated on the basis of the expression (1) described above.

Therefore, even if the feature at the first point 304 in the posture of Fig. 5A is learned, it is difficult to specify the arm in the posture of Fig. 5B on the basis of this learning data.

In contrast to this, in a case where rotation correction of the pair of pixels 302 is performed, it is possible to accurately and effectively detect a part in various postures. This is described in detail below.

In Fig. 6A, a base point 401 can be calculated on the basis of three-dimensional coordinates of pixels included in a foreground human area in a real-world coordinate system as described above. For example, the base point 401 is a point at a position corresponding to the center of gravity, the average, or the median of the three-dimensional coordinates of the pixels included in the foreground human area in the real-world coordinate system.

A reference vector 406 at the first point 404 is determined by calculating a shortest geodesic path 408 from the base point 401 to a first point 404.

Then, as illustrated in Fig. 6B, a feature at the first point 404 in a certain posture is calculated by using a pair of pixels 402, and the feature thus calculated are stored as learning data. This learning data is used when a human body part is specified.

Fig. 6C illustrates a method for selecting the pair of pixels 402 in a case where the posture has changed. As illustrated in Fig. 6C, in a case where the posture has changed, the direction of the reference vector 406 is rotated. Positions obtained after rotating the positions of the pair of pixels 402 illustrated in Fig. 6B in accordance with the rotation are calculated, and the pair of pixels 402 located at the calculated positions on the depth image is selected as pixels used for calculation of a feature.

Then, a feature at the first point 404 is calculated by using the selected pair of pixels 402, and the part is specified by comparison with the learning data. This maintains consistency of feature calculation using the pair of pixels 402, thereby achieving immutability against a change of the posture.

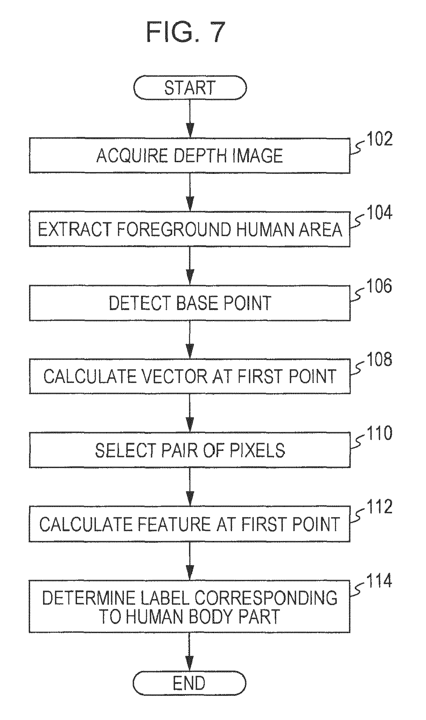

Next, an example of a procedure of human body part detection processing in the present embodiment is described below with reference to Fig. 7. Fig. 7 is a flow chart illustrating an example of the human body part detection processing in the present embodiment.

First, the depth image acquisition unit 102 of the human body part detection system 100 acquires a depth image from a depth camera or a recording medium (Step S102). Then, the foreground human area extraction unit 104 extracts a foreground human area from the depth image (Step S104).

Next, the base point detection unit 202 detects a base point in the foreground human area (Step S106). Then, the vector calculation unit 204 calculates a reference vector at a first point by calculating a shortest geodesic path) from the base point to the first point (Step S108).

Then, the selection unit 206 calculates positions obtained after rotating the positions of a pair of pixels used for calculation of a feature in a learning model in accordance with the direction of the reference vector and selects pixels located at the calculated positions on the depth image as pixels used for calculation of a feature (Step S110).

Then, the feature calculation unit 208 calculates the feature at the first point on the basis of information on depth of the selected pair of pixels (Step S112). This feature is a binary string representing a local feature obtained by applying the expression (1) to various pairs of pixels.

The label determination unit 210 determines a label corresponding to a human body part on the basis of the feature at the first point and the learning model (Step S114). This specifies the human body part.

As described above, according to the human body part detection system 100 according to the present embodiment, positions after rotating positions of a pair of pixels used for calculation of a feature in a learning model in accordance with a direction of a reference vector are calculated. Then, pixels located at the calculated positions on a depth image is used as pixels used for calculation of a feature. It is therefore possible to accurately and effectively detect a body part in various postures.

Embodiment 2

In Embodiment 1, a body part is detected on a pixel basis. However, a body part may be detected on a superpixel basis, which is a group of a plurality of pixels. In the present Embodiment 2, a case where a body part is detected on a superpixel basis is described.

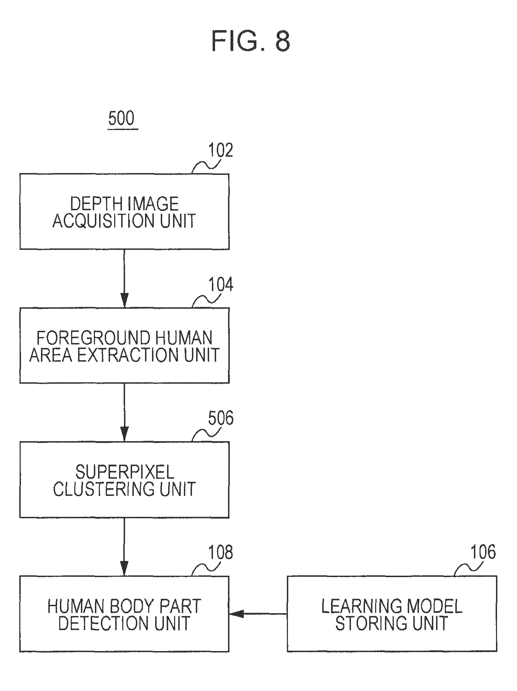

First, an example of a configuration of a human body part detection system 500 according to the present embodiment is described with reference to Fig. 8. Fig. 8 is a block diagram illustrating an example of a configuration of the human body part detection system 500 according to the present embodiment. In Fig. 8, constituent elements that are similar to those of the human body part detection system 100 illustrated in Fig. 1 are given identical reference signs, and description thereof is omitted.

As illustrated in Fig. 8, the human body part detection system 500 includes a superpixel clustering unit 506 in addition to a depth image acquisition unit 102, a foreground human area extraction unit 104, a learning model storing unit 106, and a human body part detection unit 108 described with reference to Fig. 1.

The superpixel clustering unit 506 unifies a plurality of pixels in a depth image as a superpixel. For example, the superpixel clustering unit 506 unifies approximately ten thousand pixels that constitutes the foreground human area as approximately several hundred superpixels. The superpixel clustering unit 506, set, as depth of each superpixel, the average of values of depth of a plurality of pixels unified as the superpixel.

A method for unifying pixels as a superpixel is not limited to a specific one. For example, the superpixel clustering unit 506 may unify pixels as a superpixel by using three-dimensional coordinates (x, y, z) of pixels included in a depth image in a real-world coordinate system.

A procedure of processing for detecting a human body part is similar to that illustrated in Fig. 7. However, in the present embodiment, processing for unifying a plurality of pixels in a depth image as superpixels by the superpixel clustering unit 506 is performed between Step S104 and Step S106 in Fig. 7. Furthermore, in the steps that follows Step S106, processing is performed not on pixels but on superpixels.

In the present embodiment, a plurality of pixels in a depth image are unified as superpixels. One advantage of this is to allow an improvement in robustness against noise contained in the depth information.

Another advantage is to allow a marked improvement in processing time. This advantage is described in detail below.

A calculation time of the Dijkstra's algorithm needed to generate a geodesic distance map is $O(|E|+|V|\log|V|)$ where $|E|$ is the number of branches in the graph, and $|V|$ is the number of points in the graph. The processing time is directly related to the number of pixels in a foreground human area $f_g$. Therefore, if the number of pixels can be reduced, it is possible to improve the processing time.

Depth information obtained by a depth camera or a depth sensor contains noise. This noise occurs due to the influence of a shadow of an object, and in a case where a depth sensor using infrared rays is used, due to the influence of environmental light stronger than the infrared rays, the influence of a material of an object that scatters the infrared rays, and the like. Pixel-basis feature calculation is more susceptible to such noise.

In view of this, in the present embodiment, a pixel-based structure is replaced with a superpixel-based structure.

For example, in a case where a color image is used, superpixel clustering is performed on the basis of pixel elements [I, a, b, x, y] where I, a, and b are color elements in a Lab color space, and x and y are coordinates of a pixel.

Meanwhile, in a case where a depth image is used, clustering is performed on the basis of elements [x, y, z, L] where x, y, and z are three-dimensional coordinates in a real-world coordinate system, and L is a label of a pixel. Note that L is an option and is used in off-line learning and evaluation processing.

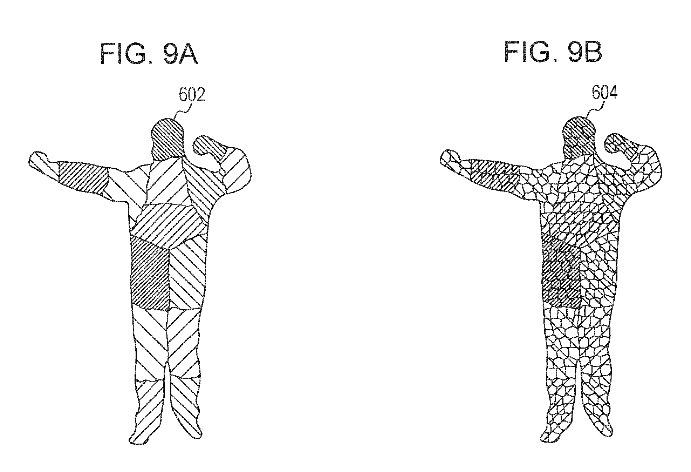

In a case where L is used, a consistent label can be given to pixels included in the same superpixel as illustrated in Figs. 9A and 9B. For example, pixels 602 of a head part are unified as some superpixels 604 having the same human body part label. Only three-dimensional coordinates [x, y, z] in the real-world coordinate system may be used to unify pixels as superpixels during actual off-line identification processing.

The average of values of depth of all pixels belonging to each superpixel is allocated as the depth of the superpixel. Comparison of a pair of pixels is replaced with comparison of a pair of superpixels.

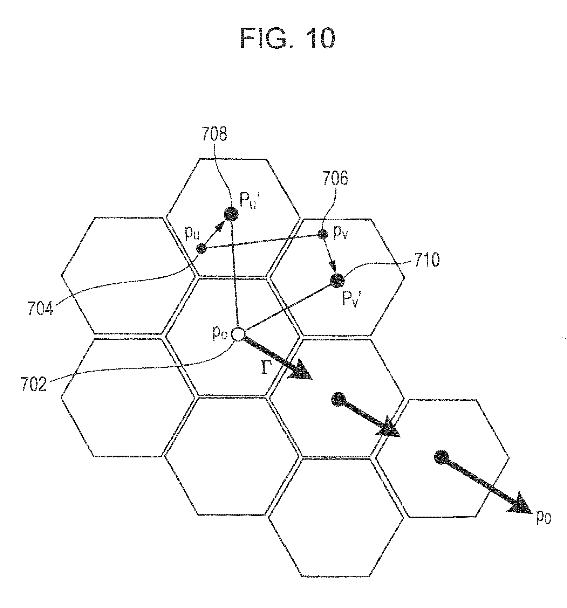

An example of superpixel-basis feature calculation is illustrated in Fig. 10. Fig. 10 illustrates a plurality of superpixels including a superpixel 702 corresponding to a first point $p_c$, and hexagonal superpixels $P_u'708$ and $P_v'710$ corresponding to a pair of pixels $p_u704$ and $p_v706$.

The pair of pixels $p_u704$ and $p_v706$ are mapped in the superpixels $P_u'708$ and $P_v'710$, respectively. Comparison of depth using the expression (1) is performed by using the average of values of depth of the pixels belonging to the superpixel $P_u'708$ and the average of values of depth of the pixels belonging to the superpixel $P_v'710$. Note that a direction r of a reference vector is a direction of a shortest geodesic path to a base point $p_o$ in the foreground human area.

For example, in a case where a depth image of a VGA size is used, a foreground human area is constituted by approximately ten thousand pixels, but these pixels can be unified as several hundred superpixels by superpixel clustering. It is therefore possible to markedly reduce the processing time. Furthermore, information on depth that varies from one pixel to another is replaced with the average of values of depth of pixels in each superpixel. This makes it possible to markedly improve the robustness against noise.

The embodiments of the present disclosure have been described above. The human body part detection systems 100 and 500 according to the embodiments described above may handle high-dimensional non-linear data by using a deep network. The deep network is, for example, based on SdA (Stacked denoising Autoencoders).

Data is non-linearly projected from an original feature space to latent representations through SdA. These representations are called an SdA-layerx feature space. SdA can remove irrelevant derivations in input data while preserving discrimination information that can be used for identification and recognition.

Meanwhile, a process of data transmission from a topmost layer to a deep layer in SdA generates a series of latent representations having different abstraction capabilities. As the layer becomes deeper, the level of abstraction becomes higher.

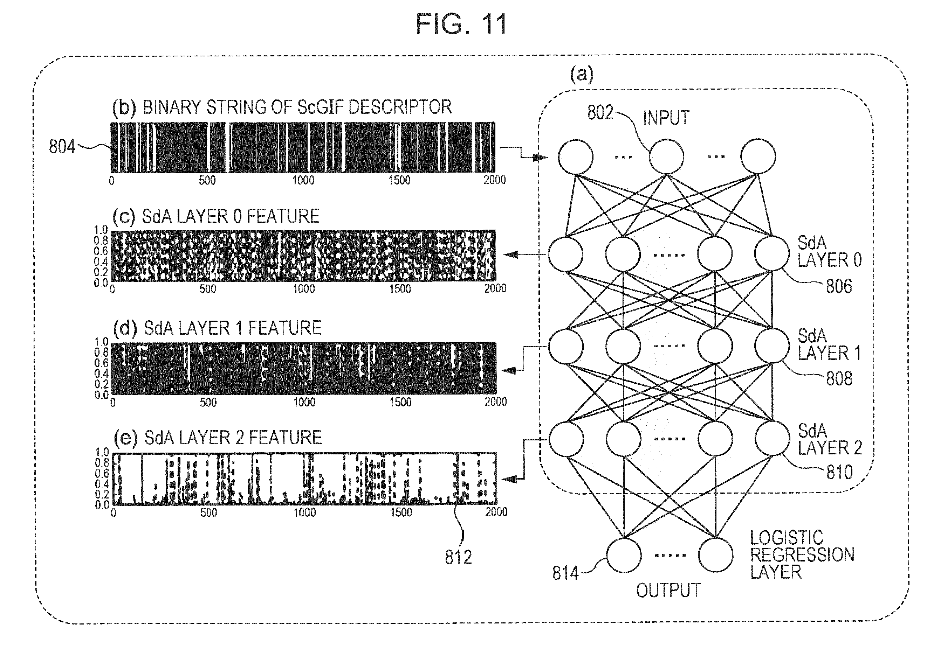

An example of a configuration of a deep artificial network based on SdA is illustrated in Fig. 11. In the example of Fig. 11, a deep network is constituted by five layers, i.e., an input layer 802, three hidden SdA layers 806, 808, and 810, and an output layer 814. The input layer 802 takes in a feature 804 of a binary string. The final hidden layer 810 generates a non-dense binary string feature 812 for discrimination.

Each layer is constituted by a set of nodes, and all of the nodes are connected with nodes in an adjacent layer. The number of nodes in the input layer 802 is equal to the number n of pairs of pixels.

A binary string that represents a feature at a first point is directly given to the deep network as input to the input layer 802. The number d of nodes in the output layer 814 coincides with the number of labels representing human body parts. That is, the number of labels coincides with the number of human body parts.

Then, linear regression identification such as logistic regression is applied to the output layer 814, and an identification result of each part of the human body is obtained.

Note that learning data of a true value is created to learn a feature of a human body part. This learning data may include a true value label corresponding to a human body part in a depth image. Note also that a plurality of learning examples may be selected to improve robustness. By such learning, a learning model which is a result of learning of a feature of a human body part is obtained.

In the above embodiments, a human body part is specified. However, the position of a joint connecting human body parts may be further estimated.

Specifically, the position of a joint of a human body is estimated on the basis of a label corresponding to a human body part determined in Step S114 of Fig. 7 and three-dimensional coordinates corresponding to the human body part.

For example, the position of a joint is estimated by using a result of calculation of a central position of each part of the human body. In some cases, the position of the joint may be moved from the central position.

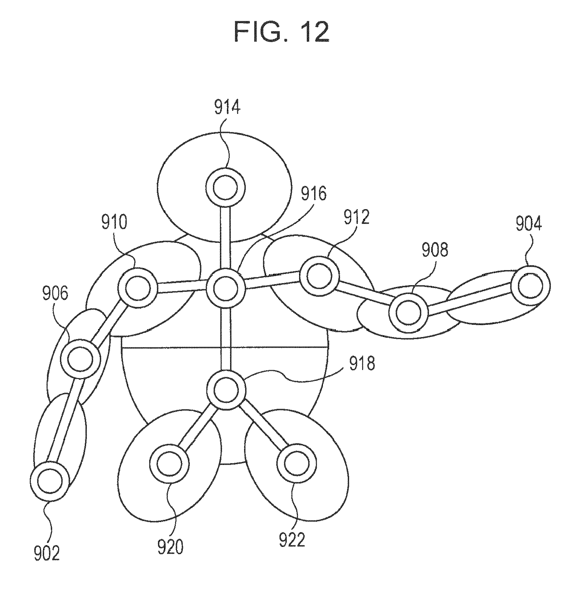

Fig. 12 illustrates examples of skeletal joints of a human body that can be estimated. As illustrated in Fig. 12, the skeletal joints that can be estimated are, for example, a right hand 902, a left hand 904, a right elbow 906, a left elbow 908, a right shoulder 910, a left shoulder 912, a head 914, a neck 916, a waist 918, a right hip 920, and a left hip 922. The joints of the right hand 902 and the left hand 904 may be moved farther from the body so as to be located closer to actual positions of the hands of the person. This further improves usability.

The estimated skeletal joints can be used for recognition of human actions, postures, and gestures and is also effective for device control and the like.

Note that the human body part detection systems 100 and 500 and arithmetic devices of modules included in the human body part detection systems 100 and 500 are generally realized by ICs (Integrated Circuits), ASICs (Application-Specific Integrated Circuits), LSIs (Large Scale Integrated Circuits), DSPs (Digital Signal Processor), or the like or may be also realized by a CPU-based processor included in a PC (Personal Computer).

These modules can be realized by LSIs each having a single function or by a single unified LSI having a plurality of functions. The modules can be also realized by an IC, a system LSI, a super LSI, an ultra LSI, or the like, which are different in terms of the degree of integration, instead of an LSI.

Furthermore, means to accomplish unification is not limited to an LSI and may be, for example, a special circuit or a general-purpose processor. For example, a special microprocessor such as a DSP in which an instruction can be given by a program command, an FPGA (Field Programmable Gate Array) that can be programmed after production of an LSI, or a processor in which LSI connection and arrangement can be reconfigured can be used for the same purpose.

In the future, the LSI may be replaced with a new technique by using a more advanced production and processing technique. Unification can be achieved by using such a technique.

The human body part detection systems 100 and 500 may be, for example, incorporated into an image acquisition device such as a digital still camera or a movie camera. The human body part detection systems 100 and 500 may be, for example, mounted in a stand-alone device that operates as an image capture system such as a capture system for professionals.

Note that the application range of the human body part detection systems 100 and 500 according to the present disclosure is not limited to the range described above, and the human body part detection systems 100 and 500 can be mounted in other types of devices.

The present disclosure is useful for a system and a method for detecting a human body part.

**Claims**

1. A human body part detection system comprising:

   an extractor that extracts a human area from an acquired depth image;
   a storage in which a learning model which is a result of learning of a feature of a human body part is stored; and
   a human body part detector that detects the human body part on the basis of the human area and the learning model,
   the human body part detector including:

   a calculator that calculates a direction of a geodesic path at a first point on the basis of a shortest geodesic path from a base point to a first point in the human area;
   a selector that selects a pair of pixels on the depth image that are located at positions obtained after rotating, around the first point, positions of a pair of pixel used for calculation of the feature in the learning model in accordance with the direction;
   a feature calculator that calculates a feature at the first point on the basis of information on depth of the selected pair of pixels; and
   a label determiner that determines a label corresponding to the human body part on the basis of the feature at the first point and the learning model.

2. The human body part detection system according to Claim 1, further comprising a clustering unit that unifies a plurality of pixels in the depth image as a single superpixel and determines a value of depth of the superpixel on the basis of values of depth of the plurality of pixels,
   the selector selecting a superpixel on the depth image located at a position obtained after rotating, around the first point, a position of a superpixel used for calculation of the feature in the learning model in accordance with the direction,
   the feature calculator calculating the feature at the first point on the basis of information on depth of the superpixel selected by the selector.

3. The human body part detection system according to Claim 1, wherein
   the extractor extracts the human area from the depth image by specifying the human area in a three-dimensional space.

**4.** The human body part detection system according to Claim 1, wherein
the calculator calculates the base point on the basis of the three-dimensional coordinates acquired from the depth image,
the base point being a point located at a position corresponding to a center of gravity, an average, or a median of three-dimensional coordinates of pixels included in the human area.

**5.** The human body part detection system according to Claim 1, wherein the label determiner includes:

an input unit that accepts input of information on the feature at the first point;
a feature search unit that searches for the feature accepted input of information at the first point in the learning model; and
a determiner that determines the label that corresponds to the human body part on the basis of a search result of the feature at the first point.

**6.** The human body part detection system according to Claim 1, further comprising an estimator that estimates a position of a joint of a human body on the basis of the label determined by the label determiner and three-dimensional coordinates corresponding to the human body part.

**7.** A human body part detection method comprising:

acquiring a depth image;
extracting a human area from the depth image;
reading out a learning model which is a result of learning of a feature of a human body part from a storage; and
detecting the human body part on the basis of the human area and the learning model,
the detecting including:

detecting a base point in the human area;
calculating a direction of a geodesic path at a first point on the basis of a shortest geodesic path from the base point to the first point in the human area;
selecting a pair of pixels on the depth image that are located at positions obtained after rotating, around the first point, positions of a pair of pixel used for calculation of the feature in the learning model in accordance with the direction;
calculating a feature at the first point on the basis of information on depth of the selected pair of pixels; and
determining a label corresponding to the human body part on the basis of the feature at the first point and the learning model.

# FIG. 1

100

102

DEPTH IMAGE
ACQUISITION UNIT

104

FOREGROUND HUMAN
AREA EXTRACTION UNIT

108

HUMAN BODY PART
DETECTION UNIT

106

LEARNING MODEL
STORING UNIT

# FIG. 2

<u>108</u>

```
┌─────────────────────────────────────────────────┐  202
│         BASE POINT DETECTION UNIT                │
│                                                   │
│      202a                          202b           │
│  ┌──────────────────┐    ┌──────────────────┐    │
│  │ THREE-DIMENSIONAL│    │   BASE POINT     │    │
│  │   COORDINATE     │    │  CALCULATION     │    │
│  │ ACQUISITION UNIT │    │      UNIT        │    │
│  └──────────────────┘    └──────────────────┘    │
└─────────────────────────────────────────────────┘
                        │
                        ▼
            ┌──────────────────┐  204
            │     VECTOR       │
            │  CALCULATION     │
            │      UNIT        │
            └──────────────────┘
                        │
                        ▼
            ┌──────────────────┐  206
            │ SELECTION UNIT   │
            └──────────────────┘
                        │
                        ▼
            ┌──────────────────┐  208
            │    FEATURE       │
            │  CALCULATION     │
            │      UNIT        │
            └──────────────────┘
                        │
                        ▼
┌─────────────────────────────────────────────────┐  210
│         LABEL DETERMINATION UNIT                 │
│                                                   │
│  ┌─────────────────────────────┐                 │
│  │        INPUT UNIT           │── 210a          │
│  └─────────────────────────────┘                 │
│  ┌─────────────────────────────┐                 │
│  │   FEATURE SEARCH UNIT       │── 210b          │
│  └─────────────────────────────┘                 │
│  ┌─────────────────────────────┐                 │
│  │    DETERMINATION UNIT       │── 210c          │
│  └─────────────────────────────┘                 │
└─────────────────────────────────────────────────┘
```

FIG. 3A

FIG. 3C

FIG. 3B

FIG. 3D

# FIG. 4A

(a) GEODESIC DISTANCE MAP

(b) ISOLINE MAP

(c) GEODESIC GRADIENT MAP

(d) COVARIANCE FEATURE EXTRACTION

$p_o$

$p_c$

$p_u$

$\theta_u$

$\theta_v$

$\Gamma$

$p_v$

# FIG. 4B

**(a) GEODESIC DISTANCE MAP**

**(b) ISOLINE MAP**

**(c) GEODESIC GRADIENT MAP**

**(d) COVARIANCE FEATURE EXTRACTION**

# FIG. 4C

(a) GEODESIC DISTANCE MAP

(b) ISOLINE MAP

(c) GEODESIC GRADIENT MAP

(d) COVARIANCE FEATURE EXTRACTION

# FIG. 4D

(a) GEODESIC DISTANCE MAP

(b) ISOLINE MAP

(c) GEODESIC GRADIENT MAP

(d) COVARIANCE FEATURE EXTRACTION

## FIG. 5A

## FIG. 5B

# FIG. 6A

# FIG. 6B

# FIG. 6C

# FIG. 7

START

ACQUIRE DEPTH IMAGE ⟩~102

EXTRACT FOREGROUND HUMAN AREA ⟩~104

DETECT BASE POINT ⟩~106

CALCULATE VECTOR AT FIRST POINT ⟩~108

SELECT PAIR OF PIXELS ⟩~110

CALCULATE FEATURE AT FIRST POINT ⟩~112

DETERMINE LABEL CORRESPONDING
TO HUMAN BODY PART ⟩~114

END

# FIG. 8

500

DEPTH IMAGE
ACQUISITION UNIT
102

FOREGROUND HUMAN
AREA EXTRACTION UNIT
104

SUPERPIXEL
CLUSTERING UNIT
506

HUMAN BODY PART
DETECTION UNIT
108

LEARNING MODEL
STORING UNIT
106

FIG. 9B

604

FIG. 9A

602

FIG. 10

FIG. 11

(a)

INPUT 802

SdA LAYER 0 806

SdA LAYER 1 808

SdA LAYER 2 810

LOGISTIC REGRESSION LAYER

OUTPUT 814

(b) BINARY STRING OF ScGIF DESCRIPTOR 804

(c) SdA LAYER 0 FEATURE

(d) SdA LAYER 1 FEATURE

(e) SdA LAYER 2 FEATURE 812

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130266182 A